# FASCICULE DE BREVET EUROPEEN

(11) **EP 0 874 020 B1**
(45) Date de publication et mention de la délivrance du brevet: **07.04.2004**
(21) Numéro de dépôt: 98400947.2
(22) Date de dépôt: 14.04.1998
(51) Int. Cl.: C08J 11/12, C08L 95/00, C08F 8/50

(54) **Dégradation catalysée de polyoléfines thermoplastiques et incorporation des produits de dégradation dans des hydrocarbures lourds**
Katalysierte Degradation von thermoplastischen Polyolefinen und Einarbeitung der Degradationsprodukte in schweren Kohlenwasserstoffen
Catalyzed degradation of thermoplastic polyolefins and incorporation of degration products into heavy hydrocarbons

(30) Priorité: 22.04.1997 FR 9705050
(43) Date de publication de la demande: 28.10.1998
(73) Titulaire: Institut Français du Pétrole, 92500 Rueil Malmaison (FR); TotalFinaElf France, 92538 Levallois Perret Cédex (FR)
(72) Inventeur: Nicaud, Jacques, 78440 Gargenville (FR); Lemoine, Guy, 76600 Le Havre (FR); Jarrin, Jacques, 92000 Nanterre (FR)

(56) Documents cités:
- EP-A- 0 414 439
- DE-A- 4 424 290
- DE-C- 19 500 425
- FR-A- 1 425 695

## Description

L'invention concerne un procédé de dégradation de polyoléfines thermoplastiques, notamment de polyéthylènes haute ou moyenne densité, et d'incorporation des polyoléfines thermoplastiques dégradées dans des hydrocarbures lourds.

Elle concerne également la valorisation de déchets de polyoléfines thermoplastiques par incorporation de leurs produits de dégradation dans les hydrocarbures lourds, tels que des bases bitumes.

Pour des raisons de protection de l'environnement, il apparaît nécessaire de recycler les emballages plastiques constitués de polyoléfines. C'est le cas en particulier pour les films, les bidons en polyéthylène haute densité utilisés notamment pour le conditionnement des huiles lubrifiantes, des détergents ménagers, des produits phytosanitaires, etc. ; ces produits constituent des gisements bien identifiés de polyéthylène haute densité à recycler.

On a pensé à incorporer les déchets de polyoléfines dans divers hydrocarbures lourds tels que des bases bitumes, pour obtenir des compositions de bitumes modifiées aux propriétés si possible améliorées, utilisables notamment dans des applications industrielles et routières.

Cependant, les méthodes de dégradation thermique et/ou mécanique qui ont été décrites jusqu'à présent s'appliquent principalement aux polyéthylènes basse densité et ne permettent pas l'incorporation de quantités importantes de tous les types de polyoléfines thermoplastiques, notamment de tous les types de polyéthylènes haute ou moyenne densité dans les hydrocarbures lourds, particulièrement lorsque ces polyéthylènes sont en mélanges, ce qui est souvent le cas des polyéthylènes récupérés pour être recyclés.

On a maintenant découvert de façon inattendue que certains composés solides minéraux pouvaient être utilisés avantageusement pour la dégradation des polyoléfines thermoplastiques, notamment lorsqu'elles sont en mélange. Ces composés permettent d'augmenter la vitesse de dégradation de tous les types de polyoléfines et donc de réduire le temps de dégradation de la (ou des) polyoléfine(s).

L'invention propose donc un procédé de dégradation de polyoléfines thermoplastiques qui comprend le mélange à température élevée d'au moins une polyoléfine thermoplastique avec au moins un catalyseur consistant essentiellement en un composé solide minéral contenant du cuivre ou un composé solide minéral contenant de l'aluminium et du silicium et présentant un caractère acide, en présence d'au moins un hydrocarbure lourd.

La valorisation des polyoléfines thermoplastiques dégradées est alors réalisée, selon l'invention, par incorporation de celles-ci dans un hydrocarbure lourd (ou un mélange d'hydrocarbures lourds), tel par exemple qu'une base bitume.

Les polyoléfines thermoplastiques dégradées selon l'invention peuvent encore être valorisées dans diverses autres compositions hydrocarbonées, telles que par exemple des cires de polyéthylène ou des hydrocarbures paraffiniques, tels que des cires de paraffines.

Les polyoléfines thermoplastiques auxquelles s'adresse le procédé de dégradation de l'invention sont généralement des homopolymères et copolymères d'oléfines-α de 2 à 8 atomes de carbone, et plus particulièrement des polyéthylènes haute ou moyenne densité, des polypropylènes ou des copolymères éthylène-propylène, ces polyoléfines thermoplastiques ayant en général une cristallinité supérieure à 35 %. A titre indicatif, les polyéthylènes haute densité ont un domaine de fusion (partiellement cristallin) aux environs de 135 °C et les polypropylènes ont un domaine de fusion (partiellement cristallin) aux environs de 165 °C.

Parmi les polyéthylènes haute densité, on peut considérer plus particulièrement les polyéthylènes de hautes masses moléculaires moyennes en poids, par exemple d'environ 150 000 à 200 000 et les polyéthylènes de très hautes masses moléculaires, allant par exemple jusqu'à environ 500 000 à 1 000 000.

Les polyoléfines considérées dans l'invention peuvent encore consister en des copolymères de l'éthylène ou du propylène avec le 1-butène, le 1-hexène ou le 1-octène.

On considère encore les mélanges de deux ou plusieurs polyoléfines thermoplastiques entre elles.

Les hydrocarbures lourds utilisables pour l'obtention selon l'invention des compositions de bitumes peuvent être des mélanges d'hydrocarbures lourds désignés ci-après par « bitumes d'obtention classique », pour les différencier des « bitumes synthétiques » décrits plus loin. Ces bitumes d'obtention classique sont issus du pétrole brut, des schistes bitumineux, d'huiles lourdes, de sables bitumineux, etc., ou même de charbon.

De tels hydrocarbures lourds sont caractérisés par exemple par une température de ramollissement, mesurée par la méthode normalisée NF-T-66 008 (température bille-anneau), d'au moins 10 °C, et/ou par une viscosité cinématique, mesurée à 100 °C, d'environ 50 à environ 700 mm²/s.

Les hydrocarbures lourds considérés dans l'invention peuvent consister par exemple en :
a) la fraction la plus lourde obtenue par distillation directe sous pression atmosphérique ou sous pression réduite du pétrole brut ;
b) la phase lourde obtenue par désasphaltage au solvant d'une fraction lourde obtenue selon les procédés décrits en a) ;
c) le produit de l'oxydation, en présence ou non de catalyseurs, d'une fraction lourde selon a), ou d'une phase lourde selon b) ;
d) le produit de l'oxydation, en présence ou non de catalyseurs, d'un mélange : d'une fraction lourde selon a) ou d'une phase lourde selon b) et
   - d'un distillat, ou
   - d'un extrait aromatique obtenu dans la désaromatisation des huiles lubrifiantes, ou
   - d'un brai de désasphaltage ; ou en
e) un mélange d'un produit oxydé obtenu selon b) ou c) ou d'une base dure, et
   - d'un distillat, ou
   - d'un extrait aromatique obtenu dans la désaromatisation des huiles lubrifiantes, ou
   - d'un brai de désasphaltage, ou
   - d'une fraction lourde selon a) ou d'une phase lourde selon b).

Le mélange d'hydrocarbures lourds utilisable peut être également un bitume synthétique ayant des caractéristiques voisines de celles d'un bitume d'obtention classique tel que décrit ci-dessus : il peut alors s'agir par exemple d'un liant synthétique clair colorable par addition de pigments.

Les mélanges d'hydrocarbures lourds peuvent encore consister par exemple en des résines de pétrole, ou des résines indène-coumarone, par exemple en mélange avec des hydrocarbures aromatiques et/ou paraffiniques.

Les résines de pétrole peuvent être préparées par polymérisation d'hydro carbures insaturés présents dans des fractions pétrolières insaturées, telles que les fractions obtenues par craquage thermique ou à la vapeur d'eau ou par pyrolyse.

Les résines indène-coumarone sont obtenues à partir des goudrons de houille.

Le procédé de dégradation des polyoléfines thermoplastiques selon l'invention peut être défini plus particulièrement par le fait qu'il comprend le mélangeage, par exemple par malaxage à une température de 200 à 450 °C, de préférence de 250 à 375 °C, d'au moins une polyoléfine thermoplastique en présence d'une proportion par exemple de 0,1 à 6 % en poids par rapport au poids de polyoléfine thermoplastique, d'au moins un catalyseur choisi parmi les solides minéraux contenant du cuivre ou ceux contenant de l'aluminium et du silicium et présentant un caractère acide, en présence d'au moins un hydrocarbure lourd.

Parmi les composés solides minéraux contenant du cuivre ou ceux contenant de l'aluminium et du silicium et présentant un caractère acide utilisables comme catalyseurs dans le procédé de dégradation de l'invention, on mentionnera par exemple des argiles activées par un traitement acide, des silices-alumines acides ou des zéolithes acides, ou encore de l'oxyde cuivreux Cu₂O. L'oxyde cuivreux est préféré et peut être utilisé plus particulièrement en une proportion de 0,1 à 2 % en poids.

La dégradation de la polyoléfine thermoplastique et son incorporation dans le mélange d'hydrocarbures lourds sont effectuées par mélangeage, en présence du catalyseur tel que défini précédemment, d'une proportion de mélange d'hydrocarbures lourds pouvant aller de 5 à 99 % en poids pour une proportion de polyoléfine thermoplastique de 1 à 95 % en poids (catalyseur inclus).

Ainsi, la(les) polyoléfine(s) thermoplastique(s) dégradée(s) peut(peuvent) être incorporée(s) aux hydrocarbures lourds considérés en des proportions convenables pour satisfaire aux applications auxquelles les compositions de bitumes sont destinées, c'est-à-dire en général d'environ 1 à 25 % en poids de polyoléfine thermoplastique dégradée (cette proportion incluant le catalyseur) pour 75 à 99 % en poids de mélange d'hydrocarbures lourds, pour les applications industrielles (par exemple la réalisation de chapes d'étanchéité) ou routières (revêtement de chaussées). Plus particulièrement, on incorporera aux hydrocarbures lourds une proportion de polyoléfine thermoplastique dégradée d'environ 1 à 15 % en poids pour les applications routières et d'environ 3 à 25 % en poids pour les applications industrielles.

Plus particulièrement, par le procédé de dégradation et d'incorporation simultanées de l'invention, on peut obtenir directement des compositions « bitumes - polymères » en toutes proportions, par exemple en des proportions convenant pour des applications industrielles et routières, ces proportions étant, comme déjà indiqué plus haut, d'environ 1 à 15 % en poids pour les applications routières et d'environ 3 à 25 % en poids pour les applications industrielles.

Il peut être avantageux de préparer des mélanges « bitumes-polymères » concentrés en polyoléfine dégradée, dits « mélanges-maîtres » contenant par exemple une proportion de 40 à 60 % en poids de bitume et une proportion de 60 à 40 % en poids de polyoléfine dégradée.

Ces mélanges-maîtres peuvent être aisément stockés. On pourra les diluer dans du bitume ultérieurement, au moment de leur utilisation, de manière à ajuster la concentration en polyoléfine dégradée à une valeur convenable pour l'application envisagée.

Dans les cas où on souhaite améliorer les propriétés à froid des compositions bitumineuses préparées selon l'invention, on pourra leur incorporer des élastomères tels que par exemple des caoutchoucs SBS (styrène-butadiène-styrène) ou des polypropylènes atactiques, en proportions usuelles.

Les opérations de mélange effectuées dans le procédé de l'invention peuvent être réalisées en faisant appel à différents types de réacteurs et de malaxeurs lorsqu'elles sont effectuées en discontinu ; elles peuvent également être effectuées en continu, par exemple dans une extrudeuse mono-vis ou à double vis.

Selon l'utilisation à laquelle on les destine, les compositions de bitumes obtenues selon le procédé de l'invention peuvent avoir par exemple une pénétrabilité à 25 °C, mesurée en 1/10 mm de 20 à 330 ; ils peuvent alors présenter une viscosité dynamique, mesurée à 60 °C de 18 à 440 Pa.s, et une viscosité cinématique de 100 à 530 mm²/s.

Les compositions de bitumes obtenues peuvent aussi avoir une pénétrabilité à 15 °C, en 1/10 mm, de 70 à 360 et, dans ce cas, une viscosité dynamique, mesurée à 60 °C, de 4,5 à 18 Pa.s, et une viscosité cinématique, mesurée à 135 °C, de 50 à 100 mm²/s.

Les exemples suivants illustrent l'invention.

### Exemples 1 à 6.

Dans un réacteur équipé d'un chauffage électrique, d'un dispositif d'agitation à ancre et d'une circulation de gaz inerte, on charge le bitume préalablement porté à 80 °C pour permettre son écoulement.

Dans ces exemples, on utilise une base bitume d'origine pétrolière ayant les caractéristiques suivantes :
- viscosité cinématique à 100 °C : 615 mm²/s ;
- pénétrabilité à 25 °C en 1/10 mm : 500 ; (selon la norme NF-T-66 004)
- point de ramollissement : 24,5 °C.
   (température bille-anneau selon la norme NF-T-66 008)

Ce bitume est désigné par Base B dans le Tableau 1.

Dans chacun des exemples 1 à 4, on introduit dans le bitume une proportion de 11,5% en poids par rapport au poids total (bitume + polyéthylène) d'un polyéthylène haute densité récupéré à partir de bidons d'huile déjà utilisés et broyés sous forme d'une poudre grossière dont la plus faible dimension est de l'ordre de quelques millimètres. Ce polyéthylène est désigné par « recyclé » dans le Tableau 1.

Les bidons étaient constitués d'un polyéthylène haute densité ayant les caractéristiques suivantes : une densité de 0,949, un indice de fluidité (ou « melt flow index ») de 0,5 g/10 min, mesuré à 190 °C sous une charge de 2,16 kg selon la norme ASTM D 1238, et des masses molaires mesurées par Chromatographie par Perméation de Gel de 150 000 pour la masse en poids et 20 000 pour la masse en nombre. Sa cristallinité mesurée par analyse calorimétrique différentielle (DSC) est de l'ordre de 50 %. Avant sa transformation sous forme de bidons, il est commercialisé sous la référence « Lupolen 5021D® » par la Société BASF.

Dans les exemples 5 et 6, on a utilisé le même polyéthylène tel que fourni par le fabricant sous forme de granulés, c'est-à-dire avant sa transformation en bidons (état dit «vierge» dans le Tableau 1).

Le catalyseur mis en jeu dans l'exemple 3 est une argile à base de montmorillonite (silicate d'aluminium hydraté ayant un rapport SiO₂/Al₂O₃ de 4/1) traitée par un acide minéral. Elle est vendue sous la marque « Tonsil Optimum FF® » par la Société Süd-Chemie. Elle sera désignée dans la suite par « Tonsil® ». Ce catalyseur est utilisé en une proportion de 0,5 % en poids par rapport à l'ensemble bitume + polyéthylène (soit environ 4,4 % par rapport au polyéthylène). Le catalyseur mis en jeu dans les exemples 4 et 6 est l'oxyde cuivreux (Cu₂O). Il est utilisé en une proportion de 0,1 % en poids par rapport à l'ensemble bitume + polyéthylène (soit environ 0,87 % par rapport au polyéthylène). Dans les exemples 1, 2 et 5, on n'a pas mis en jeu de catalyseur.

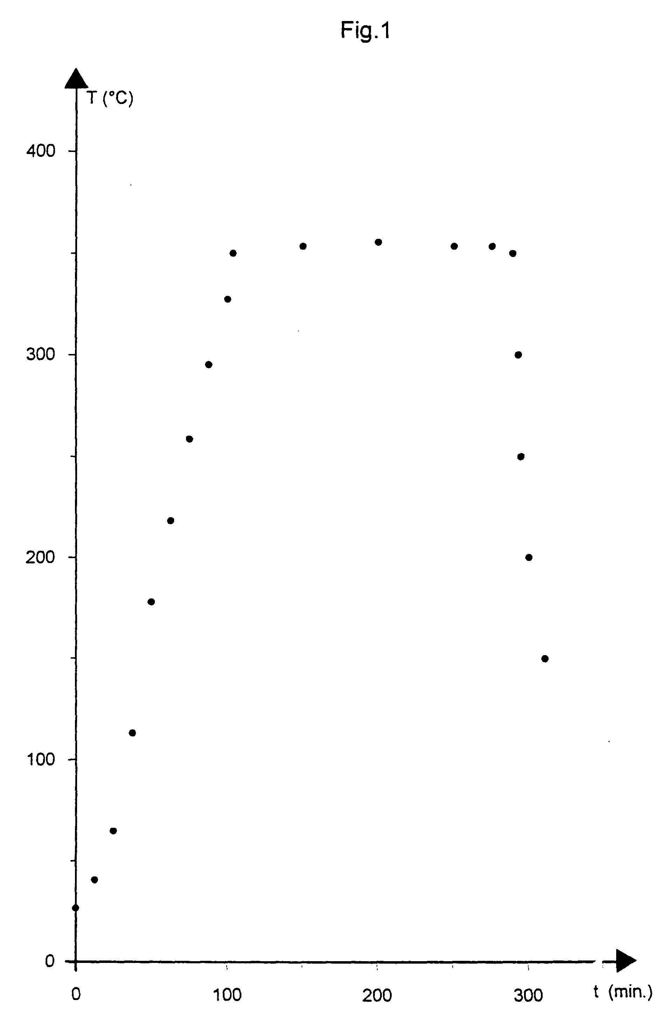

Dans chaque cas, le mélange est porté à 350 °C sous agitation (vitesse de rotation : 350 tours/min), le temps de montée en température étant d'environ 2 heures et le temps de maintien en température étant, suivant le cas, de 1 heure ou de 3 heures, comme indiqué au Tableau 1. Pour un maintien en température de 3 heures à 350 °C, un profil type de température est montré à la figure 1.

Après la phase de maintien en température, le mélange est refroidi à une température de l'ordre de 200 °C dans le réacteur, puis coulé par une vanne de fond sous forme de plaques de quelques millimètres d'épaisseur, dont on évalue l'aspect.

Le résultat des observations est indiqué dans le Tableau 1. Les exemples 1, 2 et 5 du Tableau 1 montrent qu'en l'absence de catalyseur, le simple traitement thermique du mélange bitume-polyéthylène à 350 °C pendant 1 heure ne permet pas d'obtenir un état de dispersion satisfaisant du polyéthylène « vierge » ou « recyclé » (même pendant 3 heures dans ce dernier cas) dans le bitume. Les plaques coulées présentent en effet un aspect très irrégulier avec des hétérogénéités visibles à l'oeil nu, qui traduisent la mauvaise dispersion. Par contre, tous les mélanges réalisés en présence des catalyseurs (exemples 3, 4 et 6) selon l'invention présentent, sous forme de plaques coulées, un aspect lisse qui traduit une très bonne dispersion du polyéthylène dans le bitume. La structure hétérogène de ces derniers mélanges ne peut être vue à l'oeil nu et nécessite l'usage d'un microscope optique avec une lampe à épifluorescence pour révéler la structure hétérogène à l'échelle microscopique.

Les exemples qui précèdent peuvent être répétés avec des résultats analoges en substituant les réactifs et/ou les conditions générales ou particulières décrites dans l'invention à ceux mis en oeuvre dans ces exemples.

Au vu de la description qui précède, l'homme du métier peut aisément déterminer les caractéristiques essentielles de l'invention et, sans s'écarter de l'esprit et de la portée de celle-ci, y apporter divers changements ou modifications pour l'adapter à diverses utilisations de mise en oeuvre.

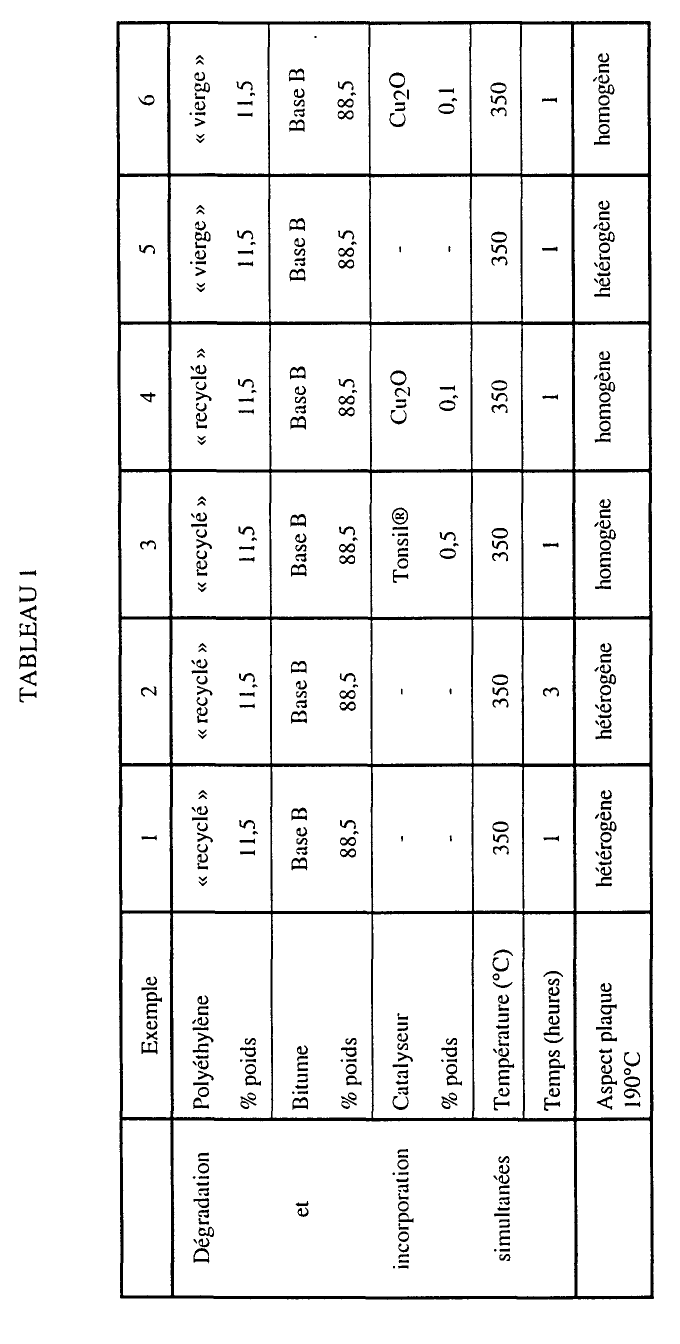

## Revendications

1. Procédé pour la dégradation d'une polyoléfine thermoplastique et son incorporation dans un mélange d'hydrocarbures lourds **caractérisé en ce qu'**il comprend le mélangeage à une température de 200 à 450 °C d'au moins une polyoléfine thermoplastique en présence d'au moins un catalyseur choisi parmi les solides minéraux contenant du cuivre et les solides minéraux contenant de l'aluminium et du silicium et présentant un caractère acide et d'au moins un mélange d'hydrocarbures lourds.

2. Procédé selon la revendication 1 **caractérisé en ce que** l'on utilise une proportion de polyoléfine thermoplastique de 1 à 95 % en poids, catalyseurs inclus, pour une proportion 99 à 5 % en poids de mélange d'hydrocarbures lourds.

3. Procédé selon l'une des revendications 1 et 2 **caractérisé en ce que** ladite polyoléfine thermoplastique est un homopolymère ou copolymère d'au moins une oléfine-α de 2 à 8 atomes de carbone.

4. Procédé selon l'une des revendications 1 et 2 **caractérisé en ce que** ladite polyoléfine thermoplastique est un polyéthylène haute ou moyenne densité.

5. Procédé selon l'une des revendications 1 à 4 **caractérisé en ce que** ledit mélange d'hydrocarbures lourds a une température de ramollissement, mesurée par la méthode normalisée NF-T-66 008 (température bille-anneau) d'au moins 10 °C et/ou une viscosité cinématique, mesurée à 100 °C, d'environ 50 à 700 mm²/s.

6. Procédé selon l'une des revendications 1 à 5 **caractérisé en ce que** le catalyseur est mis en jeu en une proportion de 0,1 à 6 % en poids par rapport au poids de polyoléfine thermoplastique.

7. Procédé selon l'une des revendications 1 à 6 **caractérisé en ce que** le catalyseur est au moins une argile activée par un traitement acide, une silice-alumine acide ou une zéolithe acide.

8. Procédé selon l'une des revendications 1 à 6 **caractérisé en ce que** le catalyseur est de l'oxyde cuivreux.

9. Procédé selon la revendication 8 **caractérisé en ce que** la proportion d'oxyde cuivreux est de 0,1 à 2 % en poids par rapport au poids de la polyoléfine thermoplastique.

10. Procédé selon l'une des revendications 1 à 9 **caractérisé en ce que** la température mise en oeuvre est de 250 à 375 °C.

11. Procédé selon l'une des revendications 1 à 10 **caractérisé en ce que** ledit mélange d'hydrocarbures lourds consiste en une base bitume.

12. Procédé selon la revendication 11 **caractérisé en ce que**, pour une application routière, la polyoléfine thermoplastique est incorporée à la base bitume à raison de 1 à 15 % en poids.

13. Procédé selon la revendication 11 **caractérisé en ce que**, pour une application industrielle, la polyoléfine thermoplastique est incorporée à la base bitume à raison de 3 à 25 % en poids.

14. Procédé selon la revendication 11 **caractérisé en ce que** la proportion de polyoléfine thermoplastique mise en jeu est telle que l'on obtient un mélange-maître contenant 40 à 60 % en poids de polyoléfine thermoplastique dégradée pour 60 à 40 % en poids de base bitume.

15. Procédé selon la revendication 11 **caractérisé en ce que** l'on dilue ultérieurement ledit mélange-maître dans une base bitume pour en ajuster la concentration à une valeur convenable pour l'application envisagée.

16. Application d'un procédé de dégradation et d'incorporation selon l'une des revendications 1 à 15 à des bidons d'huile en polyéthylène recyclés.

## Patentansprüche

1. Verfahren zum Abbau eines thermoplastischen Polyolefins und dessen Beimischen in ein Gemisch schwerer Kohlenwasserstoffe, **dadurch gekennzeichnet, dass** es das Vermischen wenigstens eines thermoplastischen Polyolefins bei einer Temperatur von 200 bis 450°C in Gegenwart wenigstens eines Katalysators, der unter den mineralischen kupferhaltigen Festkörpern und den mineralischen Festkörpern, die Aluminium und Silizium enthalten und einen sauren Charakter aufweisen, gewählt ist, und wenigstens eines Gemischs schwerer Kohlenwasserstoffe umfasst.

2. Verfahren nach Anspruch 1, **dadurch gekennzeichnet, dass** man einen Anteil an thermoplastischen Polyolefin von 1 bis 95 Gew.-%, einschließlich Katalysatoren für einen Anteil von 99 bis 5 Gew.-% an Gemisch schwerer Kohlenwasserstoffe verwendet.

3. Verfahren nach einem der Ansprüche 1 und 2, **dadurch gekennzeichnet, dass** das thermoplastische Polyolefin ein Homopolymer oder Copolymer wenigstens eines α-Olefins mit 2 bis 8 Kohlenstoffatomen ist.

4. Verfahren nach einem der Ansprüche 1 und 2, **dadurch gekennzeichnet, dass** das thermoplastische Polyolefin ein Polyethylen hoher oder mittlerer Dichte ist.

5. Verfahren nach einem der Ansprüche 1 bis 4, **dadurch gekennzeichnet, dass** das Gemisch schwerer Kohlenwasserstoffe eine Erweichungstemperatur, gemessen durch die standardisierte NF-T-66 008 -Methode (Temperatur Kugel-Ring), von wenigstens 10°C und/oder eine kinematische Viskosität, gemessen bei 100°C, von etwa 50 bis 700 mm²/s hat.

6. Verfahren nach einem der Ansprüche 1 bis 5, **dadurch gekennzeichnet, dass** der Katalysator in einem Anteil von 0,1 bis 6 Gew.-% im Verhältnis zum thermoplastischen Polyolefin eingesetzt wird.

7. Verfahren nach einem der Ansprüche 1 bis 6, **dadurch gekennzeichnet, dass** der Katalysator wenigstens ein durch eine Säurebehandlung aktivierter Ton, ein saures Silizium-Aluminiumoxid oder ein saurer Zeolith ist.

8. Verfahren nach einem der Ansprüche 1 bis 6, **dadurch gekennzeichnet, dass** der Katalysator ein kupferhaltiges Oxid ist.

9. Verfahren nach Anspruch 8, **dadurch gekennzeichnet, dass** der Anteil des kupferhaltigen Oxids 0,1 bis 2 Gew.-% im Verhältnis zum thermoplastischen Polyolefin ist.

10. Verfahren nach einem der Ansprüche 1 bis 9, **dadurch gekennzeichnet, dass** die eingesetzte Temperatur 250 bis 375°C ist.

11. Verfahren nach einem der Ansprüche 1 bis 10, **dadurch gekennzeichnet, dass** das Gemisch schwerer Kohlenwasserstoffe aus einem Bitumengrundstoff besteht.

12. Verfahren nach Anspruch 11, **dadurch gekennzeichnet, dass** für eine Strassenbauanwendung das thermoplastische Polyolefin zu dem Bitumengrundstoff im Verhältnis von 1 bis 15 Gew.-% beigemischt wird.

13. Verfahren nach Anspruch 11, **dadurch gekennzeichnet, dass** für eine industrielle Anwendung das thermoplastische Polyolefin zu dem Bitumengrundstoff im Verhältnis von 3 bis 25 Gew.-% beigemischt wird.

14. Verfahren nach Anspruch 11, **dadurch gekennzeichnet, dass** der Anteil von eingesetztem thermoplastischen Polyolefin derart ist, dass man ein Stammgemisch erhält, das 40 bis 60 Gew.-% abgebautes thermoplastisches Polyolefin für 60 bis 40 Gew.-% Bitumengrundstoff enthält.

15. Verfahren nach Anspruch 11, **dadurch gekennzeichnet, dass** man das Stammgemisch in einem Bitumengrundstoff später verdünnt, um davon die Konzentration auf einen Wert einzustellen, der für die geplante Anwendung passend ist.

16. Verwendung eines Verfahrens zum Abbau und zum Beimischen nach einem der Ansprüche 1 bis 15 für Ölkanister aus recycelten Polyethylenen.

## Claims

1. A process for degrading a thermoplastic polyolefin and incorporating it into a mixture of heavy hydrocarbons, **characterized in that** it comprises mixing, at a temperature of 200°C to 450°C, at least one thermoplastic polyolefin in the presence of at least one catalyst selected from mineral solids containing copper and mineral solids containing aluminium and silicon and having an acid nature, with at least one heavy hydrocarbon mixture.

2. A process according to claim 1, **characterized in that** the proportion of thermoplastic polyolefin used is 1% to 95% by weight, catalysts included, with a proportion of 99% to 5% by weight of a mixture of heavy hydrocarbons.

3. A process according to claim 1 or claim 2, **characterized in that** said thermoplastic polyolefin is a homopolymer or copolymer of at least one α-olefin containing 2 to 8 carbon atoms.

4. A process according to claim 1 or claim 2, **characterized in that** said thermoplastic polyolefin is a high or medium density polyethylene.

5. A process according to any one of claims 1 to 4, **characterized in that** said mixture of heavy hydrocarbons has a softening temperature, measured by the standard NF-T-66 008 method (ball-ring temperature) of at least 10°C and/or a kinematic viscosity, measured at 100°C, of about 50 to 700 mm²/s.

6. A process according to any one of claims 1 to 5, **characterized in that** the catalyst is used in a proportion of 0.1% to 6% by weight with respect to the weight of the thermoplastic polyolefin.

7. A process according to any one of claims 1 to 6, **characterized in that** the catalyst is at least one clay activated by at least one acid treatment, an acid silica-alumina or an acid zeolite.

8. A process according to any one of claims 1 to 6, **characterized in that** the catalyst is cuprous oxide.

9. A process according to claim 8, **characterized in that** the proportion of cuprous oxide is 0.1% to 2% by weight with respect to the weight of the thermoplastic polyolefin.

10. A process according to any one of claims 1 to 9, **characterized in that** the temperature used is 250°C to 375°C.

11. A process according to any one of claims 1 to 10, **characterized in that** said mixture of heavy hydrocarbons consists of a bitumen base.

12. A process according to claim 11, **characterized in that** for road applications, the thermoplastic polyolefin is incorporated into the bitumen base in a proportion of 1% to 15% by weight.

13. A process according to claim 11, **characterized in that** for industrial applications, the thermoplastic polyolefin is incorporated into the bitumen base in a proportion of 3% to 25% by weight.

14. A process according to claim 11, **characterized in that** the proportion of thermoplastic polyolefin used is such that a master mixture containing 40% to 60% by weight of degraded thermoplastic polyolefin with 60% to 40% by weight of bitumen base is obtained.

15. A process according to claim 11, **characterized in that** the master mixture is subsequently diluted in a bitumen base to adjust its concentration to a value which is suitable for the envisaged application.

16. Application of a degradation and incorporation process according to any one of claims 1 to 15 to recycled polyethylene oil containers.
